# FASCICULE DE BREVET EUROPEEN

(11) **EP 2 111 373 B1**
(45) Date de publication et mention de la délivrance du brevet: **13.04.2011**
(21) Numéro de dépôt: 07823744.3
(22) Date de dépôt: 28.08.2007
(51) Int. Cl.: C01G 49/00, C09C 1/22

(54) **PROCEDE DE PREPARATION DE FERRATES (VI)**
VERFAHREN ZUR HERSTELLUNG VON FERRATEN (VI)
METHOD OF PRODUCING FERRATES (VI)

(30) Priorité: 07.09.2006 FR 0607827
(43) Date de publication de la demande: 28.10.2009
(73) Titulaire: Institut National Polytechnique de Lorraine, F-54501 Vandoeuvre les Nancy (FR)
(72) Inventeur: KANARI, Ndue, F-54500 Vandoeuvre-les-nancy (FR)
(74) Mandataire: Poupon, Michel
(86) Numéro de dépôt international: PCT/FR2007/051845
(87) Numéro de publication internationale: WO 2008/029046

(56) Documents cités:
- EP-A- 1 496 016
- FR-A1- 2 800 056
- US-A1- 5 284 642
- DATABASE WPI Week 198806 Derwent Publications Ltd., London, GB; AN 1988-041146 XP002425298 & SU 1 318 530 A (MOSCOW LOMONOSOV UNIV) 23 juin 1987 (1987-06-23)

## Description

### Introduction

La présente invention concerne un procédé de préparation de ferrates (VI) à partir de sels et d'oxydes de fer (II) et de fer (III).

Les ferrates alcalins et alcalino-terreux, par exemple Na₂FeO₄, K₂FeO₄, CaFeO₄, BaFeO₄, etc., sont des oxydants puissants, utilisables notamment pour le blanchiment de textiles, le traitement des eaux usées, dans des processus de chimie organique ou minérale.

Les nombreux procédés de synthèse qui ont été proposés à ce jour peuvent être subdivisés en trois types : les procédés électrochimiques, les procédés d'oxydation en milieu humide et les procédés d'oxydation en milieu sec.

La préparation par voie électrochimique de ferrate (VI) implique l'oxydation d'une anode en fer dans une cellule électrochimique et elle a été réalisée pour la première fois en 1841 par Poggendorf et reste une des plus anciennes préparations électrochimiques. Cette méthode permet d'obtenir du ferrate de sodium liquide sans impuretés, mais elle engendre des coûts importants.

Les problèmes associés aux préparations en milieu aqueux sont, entre autres, la dégradation plus ou moins rapide des ferrates obtenus, la séparation plus ou moins laborieuse du ferrate des autres composants du mélange, par exemple par précipitation, au départ des solutions aqueuses.

Le brevet US 4405573 décrit par exemple un procédé de préparation à grande échelle en phase aqueuse de ferrate de potassium à partir d'hydroxyde de potassium, de chlore et de sels ferriques. Cependant, le procédé proposé requiert des réactifs très purs, nécessite la présence de composés stabilisants pour les ferrates produits et implique de nombreuses étapes d'addition et d'ajustement de réactifs, ainsi que de séparation et de précipitation des produits intermédiaires.

La synthèse par voie sèche est de plus en plus utilisée parce qu'elle permet d'éviter dans une large mesure les réactions avec l'eau. Dans certains des procédés connus, la conversion d'oxyde ferrique est réalisée à haute température, souvent supérieures à 400° C, voire 800° C, par exemple en présence d'hydroxyde de potassium ou de sodium et d'oxygène ou encore en présence de peroxyde de sodium et d'oxygène. Cependant, ces méthodes à échelle de laboratoire impliquent des réactifs onéreux et sont difficiles à transposer à plus grande échelle.

Plus récemment, un procédé de synthèse de ferrates à basse température (ou à température ambiante, c'est-à-dire sans chauffage) a été proposé dans lequel du sulfate ferreux est mélangé dans un réacteur rotatif avec du chlore et une base forte, telle que la soude ou la potasse caustique (N. Kanari, E. Ostrosi, L. Ninane, N. Neveux, et O. Evrard, « Synthesizing Alkali Ferrates using a waste as a raw material », JOM, 57(8) (2005), 39-42). L'avantage de ce procédé est qui est possible d'utiliser comme réactif un déchet généré par la production de TiO₂ et le traitement superficiel de l'acier. Le désavantage en est qu'il n'est pas transposable à grande échelle, ce qui en limite l'utilité dans le cadre d'une exploitation commerciale.

De même on décrit dans le document FR-A1-2 800 056 un procédé de synthèse par voie solide de ferrates de métaux alcalins ou alcalino-terreux. Un précurseur du fer, généralement un sulfate, est mis en contact avec de la potasse dans un four rotatif sous une atmosphère constituée d'air et de chlore. Ce procédé en une seule étape conduit à la production de quantités importantes de produits indésirables. Le produit obtenu, après la conversion en ferrates manque par ailleurs d'homogénéité.

En résumé, la préparation de ferrates (VI) à grande échelle suivant les procédés connus, bien que techniquement possible, est toujours entachée d'un, voire de plusieurs désavantages plus ou moins sérieux mentionnés ci-dessus. En effet, d'une manière générale, les facteurs limitatifs sont les contraintes concernant la nature et la pureté des réactifs, un trop grand nombre ou une trop grande complexité des étapes du procédé, l'obtention et donc le traitement d'un trop grand nombre de produits intermédiaires, des dépenses énergétiques élevées ou l'impossibilité du scaling-up d'un procédé intéressant à échelle de laboratoire.

### Objet de l'invention

L'objet de la présente invention est par conséquent de proposer un procédé simple et efficace de préparation de ferrate (VI) à partir de sels et d'oxydes de fer (II) et de fer (III), permettant la production à plus grande échelle de ferrates (VI).

### Description générale de l'invention

Conformément à l'invention, cet objectif est atteint par un procédé de préparation de granulés de ferrate (VI) comprenant les étapes :
a) enrobage de particules solides d'un hydroxyde de métal alcalin et/ou alcalino-terreux par des particules solides d'un ou de plusieurs sels ou oxydes de Fe(II) et/ou Fe(III),
b) conversion dans un réacteur à lit fluide du ou des sels ou oxydes de Fe(II) et/ou Fe(III) en ferrate (VI) dans un gaz de fluidisation contenant du chlore.

Les réacteurs dits à lit fluide ou à lit fluidisé sont très intéressants pour les réactions gaz-solide et la transposition d'un tel réacteur à une échelle plus grande est nettement moins problématique que pour d'autres types de réacteur.

Cependant, ces réacteurs, de part leur fonctionnement, ne conviennent pas pour des mélanges de particules présentant des granulométries ou des densités fort différentes, car un tel lit n'est pas fluidisable de manière homogène. Or, justement dans la pratique, les diamètres moyens des particules d'hydroxydes de métaux alcalins et alcalino-terreux disponibles dans le commerce sont de 1, 2 et 5 mm, alors que de nombreux sels et oxydes de fer (II) et (III) possèdent des granulométries moyennes nettement plus petites, souvent inférieures à 100 µm.

Grâce à l'étape préalable d'enrobage selon l'invention (étape (a)), on obtient un seul type de particules de diamètre nettement plus homogène et donc a priori utilisables dans un lit fluide.

Or, dans le cas du sulfate ferreux monohydrate par exemple, la conversion en ferrate (VI) peut être représentée par l'équation suivante :
FeSO₄.H₂O + 2 Cl₂ + 8 NaOH → 2 Na₂FeO₄ + Na₂SO₄ + 4 NaCl + 5 H₂O[1] alors que la réaction directe entre le sulfate ferreux et le chlore ne se produit pas à basse température :

   FeSO₄.H₂O + Cl₂ → pas de réaction évidente à température ambiante [2]
L'enrobage des particules d'hydroxyde et donc leur inaccessibilité apparente pour le déroulement de la réaction [1] semble par conséquent s'opposer au but

recherché. D'une manière surprenante, ceci n'est pas le cas.

Sans vouloir être lié à une théorie quelconque, les expériences réalisées semblent indiquer que la synthèse des ferrates passe par l'équation intermédiaire suivante :

FeSO₄.H₂O + 2 NaOH → Fe(OH)₂ + Na₂SO₄+ H₂O [3]

avant la conversion proprement dite en ferrate (VI) suivant l'équation :

Fe(OH)₂ + 2 Cl₂ + 6 NaOH → Na₂FeO₄ + 4 NaCl + 4 H₂O [4]

Un avantage supplémentaire important du procédé selon l'invention est la réduction ou même l'élimination quasi complète de certaines réactions indésirables. En effet, il est connu que le chlore est susceptible de réagir avec les hydroxydes de métal alcalin ou alcalino-terreux pour former les chlorures correspondants.

Par exemple, dans le cas de l'hydroxyde de sodium, la réaction exothermique suivante produit du NaCl comme produit final :

2 NaOH + Cl₂ → 2 NaCl + H₂O + 0.5 O₂ [5]

En enrobant les hydroxydes par une couche de particules de sels et/ou d'oxydes de fer, il devient ainsi non seulement possible de réduire la proportion de composés indésirables dans le produit final au-delà de la quantité prévue par l'équation [1] et d'optimiser l'utilisation du chlore, mais également de mieux contrôler la conversion en ferrate (VI).

Dans le cadre de la présente invention, les sels, inorganiques ou organiques, et/ou les oxydes de Fe(II) et/ou Fe(III) sont choisis de préférence parmi les oxalates, sulfates, nitrates, hydroxydes ou chlorures ferreux ou ferriques, les oxydes ferreux ou ferriques, ainsi que leurs mélanges.

Par conséquent, le présent procédé convient non seulement pour des procédés de chimie organique ou inorganique exigeant des réactifs relativement purs et onéreux, mais il peut être utilisé avantageusement dans la pratique pour la reconversion de déchets de certaines industries, comme par exemple la métallurgie ou la production de dioxyde de titane.

L'hydroxyde de métal alcalin et/ou alcalino-terreux est choisi de préférence parmi l'hydroxyde de sodium, de potassium, de calcium ou de baryum, ainsi que leurs mélanges, en particulier sous une forme disponible dans le commerce, comme par exemple des granulés d'un diamètre moyen de 1, 2 ou 5 mm.

Dans un mode réalisation particulièrement préféré, le ou les sel(s) de fer est/sont du sulfate ferreux et/ou ferrique, de préférence du sulfate ferreux, de manière davantage préférée du sulfate ferreux monohydrate, ayant de préférence d'une granulométrie moyenne d'environ 5 à 200 µm, en particulier d'environ 10 à 100 µm, et l'hydroxyde de métal alcalin et/ou alcalino-terreux est l'hydroxyde de sodium et/ou de potassium, de préférence l'hydroxyde de sodium de préférence d'une granulométrie moyenne d'environ 0,5 à 10 mm, en particulier d'environ 0.7 à 5 mm et plus particulièrement l'hydroxyde de sodium commercial d'environ 1 mm.

L'étape a) d'enrobage des particules solides d'hydroxyde par les particules de sels ou d'oxydes de fer est effectuée dans un dispositif approprié, de préférence dans un mélangeur, en particulier dans un mélangeur rotatif ou un mélangeur fixe avec des pales rotatives de mélange.

Bien que les particules de sel de fer adhèrent généralement bien sur les particules d'hydroxyde sans autres mesures particulières par réaction entre l'hydroxyde avec les sels de fer, il peut être nécessaire ou souhaitable de favoriser cet enrobage, par exemple en ajoutant à l'étape a) une faible quantité d'un adjuvant, comme par exemple de l'eau, ou encore en utilisant des sels

(partiellement) hydratés, ou encore en chauffant légèrement le mélange afin d'initier la réaction.

Comme indiqué ci-dessus, l'étape b) de conversion des particules de sels et oxydes de fer en ferrate (VI), dont la fluidisation en présence de particules nettement plus grandes a été rendue possible par l'enrobage de l'étape a), peut ensuite se dérouler dans un réacteur à lit fluidisé de manière homogène.

Le gaz de fluidisation contenant du chlore peut être tout gaz ou mélange gazeux approprié contenant une fraction suffisante ou même un excès de chlore gazeux. Il s'agit de préférence de l'air ou de l'azote contenant 1 à 40% molaires, de préférence 3 à 15% molaires de chlore, en fonction des conditions opératoires choisies. Dans un mode particulièrement avantageux de l'invention, le gaz de fluidisation contenant du chlore sortant du réacteur à lit fluide est recirculé dans le réacteur, le cas échéant après ajustement de sa teneur en chlore.

Dans le cadre de la présente invention, la température de l'étape b) est de préférence contrôlée ou régulée, par exemple au moyen d'un dispositif de thermostatisation, de préférence à des valeurs inférieures à 150°C, en particulier à des valeurs inférieures à 80°C.

Le temps de séjour moyen des particules à l'étape b) est généralement de l'ordre de 0,5 à 60 minutes, de préférence de 1 à 30 minutes, en particulier de 2 à 15 minutes.

Les granulés de ferrate (VI) sont retirés de préférence en continu du réacteur à l'étape b) et ils sont de préférence essentiellement secs, c'est-à-dire contiennent généralement au plus 0,4 % en poids d'eau libre, de préférence au plus 0,2 % en poids, d'une manière particulièrement préférée au plus 0,1 % en poids. On entend par eau libre, toute eau qui ne se trouve pas sous forme d'eau de cristallisation ou de solvatation des constituants des granulés.

D'une manière générale les étapes a) et b) selon l'invention peuvent être réalisées de manière plus ou moins indépendante tant dans l'espace que dans le temps. Cependant, dans une forme de réalisation particulièrement préférée, le procédé est opéré en continu, c'est-à-dire les particules enrobées sont prélevées à l'étape a), introduits en continu dans le réacteur à lit fluide de l'étape b) et retirés en continu du réacteur après conversion des sels et oxydes de fer en ferrates (VI).

### Description détaillée de l'invention

D'autres particularités et caractéristiques de l'invention ressortiront de la description détaillée de quelques modes de réalisation avantageux présentés ci-dessous, à titre d'illustration, en référence aux figures annexées.
- Fig.1:: (a) particules de NaOH avant l'étape a) en microscopie optique, (b) particules de sulfate ferreux monohydrate avant l'étape a) en micros- copie électronique à balayage,
- Fig.2:: (a) particules de NaOH avant l'étape a) en microscopie optique, (b) particules de NaOH après l'enrobage de l'étape a) par des particules de sulfate ferreux monohydrate en microscopie optique,
- Fig.3:: coupe à travers une particule de NaOH enrobée de particules de sulfate ferreux monohydrate après l'étape a) en microscopie électronique à ba- layage, et composition élémentaire par microscopie électronique à ba- layage du noyau (1) et de l'enrobage (2).

### Exemples

### Exemple 1 : Particules de NaOH de 2 mm et sulfate ferreux monohydrate

### Etape a) : Enrobage de particules de NaOH par des particules de sulfate de fer

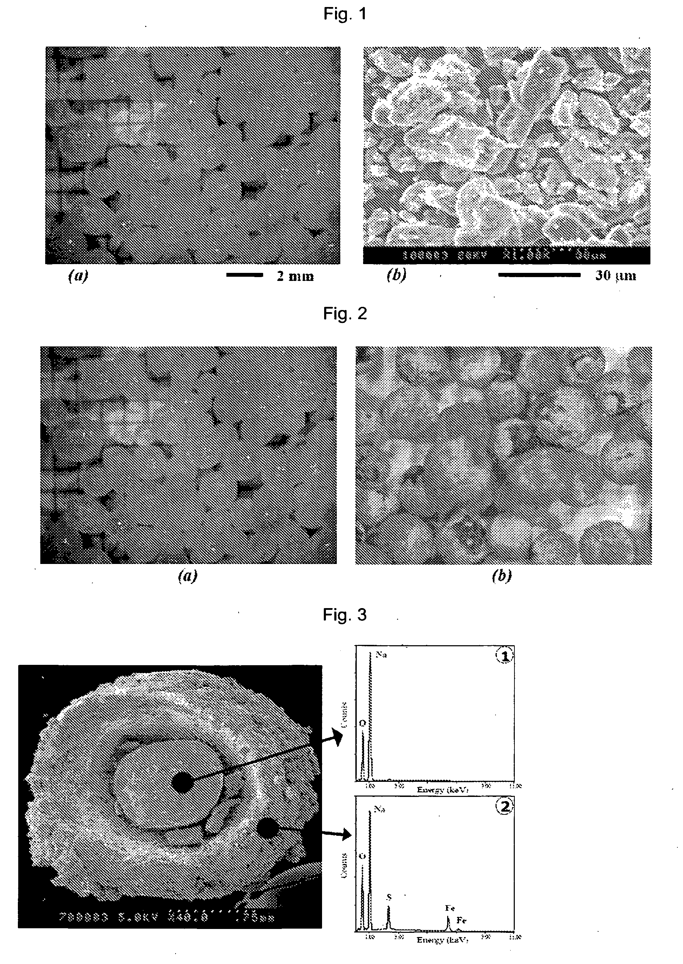

De l'hydroxyde de sodium sous forme de particules de 2 mm de diamètre a été utilisé pour ces essais (voir Fig. 1(a) ou 2(a)). Le sulfate de fer était du sulfate ferreux monohydrate (voir Fig. 1(b)). L'enrobage a été effectué dans un réacteur rotatif d'une capacité de 2,5 litres en l'absence d'atmosphère. L'évolution de la température a été suivie pendant l'enrobage, montrant une réaction exothermique élevant la température jusqu'à 60 °C. Les particules de NaOH sont devenues gris-noir, mais en conservant plus ou moins la même forme (voir également Fig. 2(b)).

Les substances initiales, NaOH et sulfate ferreux monohydrate, de même que les particules enrobées après l'étape a) ont été caractérisées par microscopie optique, par microscopie électronique à balayage et la teneur en fer des particules enrobées a été déterminée par analyse chimique. Les images des particules de NaOH et de FeSO₄.H₂O sont montrées à la Fig. 1(a) et 1(b), respectivement.

Les particules de NaOH sont des particules essentiellement sphériques d'un diamètre inférieur ou égal à 2 mm (Fig. 1(a) ou 2(a)), alors que les particules de sulfate ferreux monohydrate sont formées par des grains de différentes formes d'un diamètre équivalent inférieur à 30 µm (Fig. 1(b)).

Les particules obtenues après enrobage qui sont montrées à la Fig. 2(b) ont conservé leur forme, mais ont augmenté de taille dû à la réaction avec le sulfate de fer.

Les analyses par microscopie électronique à balayage de ces particules enrobées sont montrées à la Fig. 3. L'examen de ces résultats semble indiquer que
■ l'enrobage est composé essentiellement de Na, O, S et Fe indiquant la « réaction » du NaOH avec le sulfate de fer,
■ les particules de NaOH deviennent poreuses facilitant ainsi la diffusion des gaz réactionnels pendant la synthèse des ferrates,
■ le noyau est constitué essentiellement de Na et de O indiquant la présence de NaOH n'ayant pas réagi (il est à noter que l'excès de NaOH était de quatre fois la quantité stoechiométrique de l'équation [3] ci-dessus).

### Etape b) : Synthèse de ferrate (VI) dans un réacteur à lit fluide d'un diamètre de 1,75 cm

Pour la synthèse, on a utilisé un réacteur à lit fluide d'un diamètre intérieur d'environ 1,75 cm, muni d'une chemise de thermostatisation.

Environ 10 g des particules enrobées de l'étape a) ont été chargées dans le réacteur et le débit de fluidisation a été réglé à 1100 L/h. La teneur en chlore dans le gaz de fluidisation (air + Cl₂, N₂ + Cl₂) était de 5 % molaires et le temps de séjour était de 15 minutes. La température du fluide de thermostatisation a été variée de 25 à 55 °C.

L'observation visuelle a indiqué une bonne fluidisation des solides sans formation de poussières (fines). Les particules de ferrate après l'étape b) ont été comparées à celles avant la conversion et elles présentaient une forme similaire, mais la couleur pourpre indiquait la présence de ferrate. En outre, la dissolution des solides suivant l'étape b) dans l'eau a confirmé la présence de fer à l'état hexavalent.

**Tableau 1: Conditions expérimentales et efficacité de la synthèse de Fe(VI) en utilisant des particules de NaOH de 2 mm.**

| Air + Cl2 L/h | Cl₂ % | T °C | t min | Feₜₒₜₐₗ g/kg | Fe^{VI} g/kg | Fe^{VI} % |
|---|---|---|---|---|---|---|
| 1100 | ∼5.5 | 25 | 15 | 73.5 | 14.8 | 20.1 |
| 1100 | ∼5.5 | 35 | 15 | 74.5 | 15.8 | 21.2 |
| N₂ + Cl₂, L/h | | | | | | |
| 1100 | ∼5.5 | 25 | 15 | 76.9 | 9.8 | 12.7 |
| 1100 | ∼5.5 | 35 | 15 | 81.6 | 14.4 | 17.6 |
| 1100 | ∼5.5 | 45 | 15 | 80.6 | 18.4 | 22.8 |
| 1100 | -5.5 | 55 | 15 | 73.2 | 21.1 | 28.8 |

Ces solides contenaient environ 70 à 80 g/kg de fer. Les meilleurs résultats ont été obtenus en utilisant l'azote comme gaz de fluidisation, probablement dû à la présence d'humidité dans l'air susceptible de décomposer les ferrates. Des rendements plus élevés ont été obtenus lorsque la température de thermostatisation a été fixée à 55 °C.

### Exemple 2 : Synthèse de ferrate dans un réacteur à lit fluide d'un diamètre de 2 cm avec des particules de NaOH de 1 mm et des particules de sulfate de fer

### Etape a) : Enrobage de particules de NaOH par des particules de sulfate de fer

De l'hydroxyde de sodium sous forme de particules d'environ 1 mm de diamètre a été utilisé pour ces essais. Le mode opératoire des essais et les résultats obtenus sont quasi analogues à ceux retenus pour l'étape a) de l'Exemple 1.

### Etape b) : Synthèse de ferrate (VI) dans un réacteur à lit fluidisé d'un diamètre de 2 cm

Les particules enrobées à l'étape a) ont été traitées d'une manière similaire à l'Exemple 1, étape b) mais dans un réacteur à lit fluide d'un diamètre de 2 cm et à un débit de 800 L/h.

La température de thermostatisation a été variée de 18 à 55 °C, alors que la teneur en chlore a été fixée à 2,5 et à 5,0 %, respectivement.

L'analyse visuelle dans l'eau des essais à 2,5 % de chlore n'a pas révélé la présence de ferrates, contrairement aux produits de synthèse obtenus à 5,0 % de chlore, ce qui indique que la synthèse de ferrate est affectée par la pression partielle de chlore.

**Tableau 2: Conditions expérimentales et efficacité de la synthèse de Fe (VI) dans un réacteur à lit fluide d'un diamètre de 2 cm en utilisant des particules de NaOH de 1 mm**

| Air+Cl₂ L/h | Cl₂ % | T °C | t min | Fe_{Total} g/kg | Fe^{VI} g/kg | Fe^{VI} % |
|---|---|---|---|---|---|---|
| 800 | ~5.0 | 40 | 5 | 73.5 | 36.2 | 49.3 |
| 800 | ∼5.0 | 50 | 5 | 74.2 | 36.8 | 50.3 |
| N₂ + Cl₂, L/h | | | | | | |
| 800 | ∼5.0 | 40 | 5 | 71.5 | 39.7 | 55.5 |
| 800 | ∼5.0 | 50 | 5 | 73.6 | 37.5 | 51.0 |

Ces résultats indiquent que le produit de synthèse contenait entre 72 et 74 g/kg de fer et environ la moitié était du fer(VI). En outre, le rendement en présence d'air est légèrement inférieur à celui en atmosphère d'azote.

## Revendications

1. Procédé de préparation de granulés de ferrate (VI) comprenant les étapes :
a) enrobage de particules solides d'un hydroxyde de métal alcalin et/ou alcalino-terreux par des particules solides d'un ou de plusieurs sels ou oxydes de Fe(II) et/ou Fe(III),
b) conversion dans un réacteur à lit fluide du ou des sels ou oxydes de Fe(II) et/ou Fe(III) en ferrate (VI) dans un gaz de fluidisation contenant du chlore.

2. Procédé selon la revendication 1, dans lequel les sels de Fe(II) et/ou Fe(III) sont choisis parmi les sulfates, nitrates, hydroxydes ou chlorures ferreux ou ferriques, ainsi que leurs mélanges.

3. Procédé selon la revendication 1 ou 2, dans lequel l'hydroxyde de métal alcalin. et/ou alcalino-terreux est choisi parmi l'hydroxyde de sodium, de potassium, de calcium ou de baryum, ainsi que leurs mélanges.

4. Procédé selon l'une quelconque des revendications précédentes, dans lequel le ou les sel(s) de fer est/sont du sulfate ferreux et/ou ferrique, de préférence du sulfate ferreux monohydrate, et l'hydroxyde de métal alcalin et/ou alcalino-terreux est l'hydroxyde de sodium et/ou de potassium, de préférence l'hydroxyde de sodium.

5. Procédé selon l'une quelconque des revendications précédentes, dans lequel l'étape a) est effectuée dans un mélangeur, en particulier dans un mélangeur rotatif ou un mélangeur fixe avec des pales rotatives de mélange.

6. Procédé selon l'une quelconque des revendications précédentes, dans lequel le gaz contenant du chlore est de l'air ou de l'azote contenant 1 à 40% molaires, de préférence 3 à 15% molaires de chlore.

7. Procédé selon l'une quelconque des revendications précédentes, dans lequel le gaz de fluidisation contenant du chlore sortant du réacteur à lit fluide est recirculé dans le réacteur, le cas échéant après ajustement de sa teneur en chlore.

8. Procédé selon l'une quelconque des revendications précédentes, dans lequel la température de l'étape b) est contrôlée au moyen d'un dispositif de thermostatisation à des valeurs inférieures à 150°C, de préférence inférieures à 80°C.

9. Procédé selon l'une quelconque des revendications précédentes, opéré en continu.

## Claims

1. Method of preparing ferrate (VI) granules comprising the stages:
a) coating solid particles of an alkali and/or alkali earth metal hydroxide with the solid particles of one or more Fe(II) and/or Fe(III) salts or oxides,
b) converting in a fluid bed reactor the Fe(II) and/or Fe(III) salt or salts or oxides into ferrate (VI) in a fluidisation gas-containing chlorine.

2. Method according to claim 1, in which the Fe(II) and/or Fe(III) salts are selected from ferrous or ferric sulphates, nitrates, hydroxides or chlorides as well as mixtures thereof.

3. Method according to claim 1 or 2, in which the alkali and/or alkali earth metal hydroxide is selected from sodium, potassium, calcium or barium hydroxide, as well as mixtures thereof.

4. Method according to any one of the preceding claims, in which the iron salt or salts is/are ferrous and/or ferric sulphate, preferably monohydrate ferrous sulphate, and the alkali and/or alkali earth metal hydroxide is sodium and/or potassium hydroxide, preferably sodium hydroxide.

5. Method according to any one of the preceding claims, in which stage a) is performed in a mixer, in particular in a rotary mixer or a fixed mixer with rotating mixing vanes.

6. Method according to any one of the preceding claims, in which the gas content of the chlorine is air or nitrogen containing 1 to 40% mol, preferably 3 to 15% mol chlorine.

7. Method according to any one of the preceding clams, in which the fluidisation gas containing chlorine exiting from the fluid bed reactor is recirculated in the reactor, if need be after adjusting its level of chlorine.

8. Method according to any one of the preceding claims, in which the temperature of stage b) is controlled by means of a thermostating device with values of less than 150°C, preferably less than 80°C.

9. Method according to any one of the preceding claims, operated continuously.

## Patentansprüche

1. Verfahren zur Herstellung granularer Ferrate(VI) mit den Schritten:
a) Ummanteln von Feststoffteilchen eines Alkalimetallhydroxids und/oder Erdalkalimetallhydoxids mit Feststoffteilchen eines oder mehrer Salze oder Oxide von Fe(II) und/oder Fe(III),
b) Umwandeln des oder der Salze oder Oxide von Fe(II) und/oder Fe(III) zu einem Ferrat(VI) in einem Wirbelschichtreaktor mit einem Chlor enthaltenden Wirbelgas.

2. Verfahren nach Anspruch 1, bei dem die Fe(II) und/oder Fe(III)-Salze unter Eisensulfaten, -nitraten, -hydroxiden, -chloriden oder eisenhaltigen Sulfaten, Nitraten, Hydroxiden oder Choriden oder deren Mischungen ausgewählt sind.

3. Verfahren nach einem der Ansprüche 1 oder 2, bei dem das Alkalimetall- und/oder Erdalkalimetallhydroxid unter Natrium-, Kalium-, Calcium- oder Bariumhydroxid oder deren Mischungen ausgewählt ist.

4. Verfahren nach einem der vorhergehenden Ansprüche, bei dem das oder die Salze des Eisens aus Eisensulfat oder einem eisenhaltigen Sulfat, vorzugsweise aus Eisensulfatmonohydrat, besteht beziehungsweise bestehen und das Alkalimetall- und/oder Erdalkalimetallhydroxid Natriumhydroxid und/oder Kaliumhydroxid und vorzugsweise Natriumhydroxid ist.

5. Verfahren nach einem der vorhergehenden Ansprüche, bei dem der Schritt a) in einem Mischer, insbesondere einem Rotationsmischer oder einem feststehenden Mischer mit rotierenden Mischschaufelblättern durchgeführt wird.

6. Verfahren nach einem der vorhergehenden Ansprüche, bei dem das Chlor enthaltende Gas Luft oder Stickstoff mit einem 1 % bis 40% molaren vorzugsweise 3% bis 15% molaren Anteil an Chlor ist.

7. Verfahren nach einem der vorhergehenden Ansprüche, bei dem das Chlor enthaltende und aus dem Wirbelschichtreaktor austretende Wirbelgas dem Reaktor wieder zugeführt wird, gegebenenfalls nach Anpassung seines Chlorgehalts.

8. Verfahren nach einem der vorhergehenden Ansprüche, bei dem die Temperatur während des Schrittes b) mittels eines Temperatursteuerungsgerätes auf Werte unterhalb 150 Grad Celsius und vorzugsweise unterhalb 80 Grad Celsius eingestellt wird.

9. Verfahren nach einem der vorhergehenden Ansprüche, das kontinuierlich geführt wird.
